# EUROPEAN PATENT APPLICATION

(11) **EP 3 806 063 A1**
(43) Date of publication of application: **14.04.2021**
(21) Application number: 18921867.0
(22) Date of filing: 08.06.2018
(51) Int. Cl.: G08G 1/123, G08G 1/00, G08G 1/09

(54) **VEHICLE MANAGEMENT SYSTEM, VEHICLE MANAGEMENT DEVICE, AND VEHICLE MANAGEMENT METHOD, AND METHOD AND VEHICLE MANAGEMENT DEVICE**

(71) Applicant: NISSAN MOTOR CO., LTD., Yokohama-shi, Kanagawa 221-0023 (JP); RENAULT s.a.s., 92100 Boulogne-Billancourt (FR)
(72) Inventor: KAJIWARA, Shingo, Atsugi-shi, Kanagawa 243--0123 (JP); MIYOSHI, Takehiro, Atsugi-shi, Kanagawa 243--0123 (JP)
(74) Representative: Osha Liang
(86) International application number: PCT/IB2018/000744
(87) International publication number: WO 2019/234468

(57) **Abstract**

A vehicle management system comprising a server (1) and a user terminal (2) for managing a vehicle with an autonomous driving function (4), the terminal device (2) includes a terminal communication unit which transmits a user position information indicating the user's present position to the server (1) through telecommunications network, and the server communication unit that receives the vehicle location information indicating the present position of the vehicle (4) and a vehicle management unit for setting a boarding point at which the user rides the vehicle (4) and for managing traveling of the vehicle by adjusting, in accordance with the present position of the user and the position of the vehicle (4) with respect to the boarding point, a time at which the vehicle (4) arrives at the boarding point.

## Description

### [TECHNICAL FIELD]

The present invention relates to a vehicle management system, a vehicle management device, and a vehicle management method.

### [BACKGROUND OF THE INVENTION]

Conventionally, the reservation method of the transportation service corresponding to a plurality of passenger requirements by the same vehicle is known (e.g., Patent Document 1). This reservation method includes a step of receiving a ride request including the designation of departure point and destination, generates a feasible ride deliveries relating to each type of service for each vehicle based on the ride request from the user and the schedule information of each vehicle, and calculates the selection probability of each ride for each combination of ride deliveries satisfying the predetermined condition among the combinations of feasible ride deliveries. Then, based on the calculated selection probability, a combination of the deliveries to be presented is selected from among the combination groups of ride deliveries, and a combination of ride deliveries is presented to the user.

### [CITAION LIST]

### [PATENT DOCUMENT]

[Patent Document 1] JP2014-238831A

### [SUMMARY OF THE INVENTION]

### [PROBLEM TO BE SOLVED BY THE INVENTION]

However, even if the reservation is fixed by the above-mentioned reservation method, the user is not always at a boarding point at the scheduled time according to the schedule of the ride deliveries, and user may be late to the boarding point at the time specified in the schedule. In such a case, traffic flow is obstructed by long-term parking of a vehicle specified in the ride deliveries on the road.

The problem to be solved by the present invention is to provide a vehicle management system, a vehicle control device, and a vehicle control method that can prevent vehicle from stopping at boarding point of user for a long time and prevent traffic flow from becoming obstructed.

### [MEANS FOR SOLVING PROBLEM]

The present invention solves the above problems by receiving a user position information indicating a current position of a user from a terminal of the user through telecommunications network, receiving a vehicle position information indicating a current position of a vehicle through the telecommunications network, setting a boarding point at which user rides the vehicle, and adjusting a time at which the vehicle arrives at the boarding point in according with the current position of the user and a position of the vehicle with respect to the boarding point.

### [EFFECT OF THE INVENTION]

According to the present invention, it is possible to prevent vehicle from stopping for a long time at boarding point of user, it is prevented flow from becoming obstructed.

### [BRIEF DESCRIPTION OF THE DRAWINGS]

Fig. 1 is a block diagram illustrating one or more embodiments of a vehicle management system according to the present invention.
Fig. 2 is flowcharts illustrating an information processing procedure executed in the vehicle management system of Fig. 1.
Fig. 3 is a diagram illustrating a vehicle allocation schedule created by a vehicle management unit of Fig. 1.
Fig. 4 is a diagram illustrating an example of a travel route based on vehicle allocation schedule transmitted from autonomous driving control unit of Fig. 1 to a transportation service vehicle (Automated Driving Vehicle).
Fig. 5 is flowcharts illustrating an information processing procedure executed in the vehicle management system of Fig. 1.
Fig. 6 is a diagram illustrating an example of the vehicle allocation schedule created by vehicle management unit of Fig. 1.
Fig. 7 is a diagram illustrating an example of the exemplary vehicle allocation schedule created by vehicle management unit of Fig. 1.

### [MODE(S) FOR CARRYING OUT THE INVENTION]

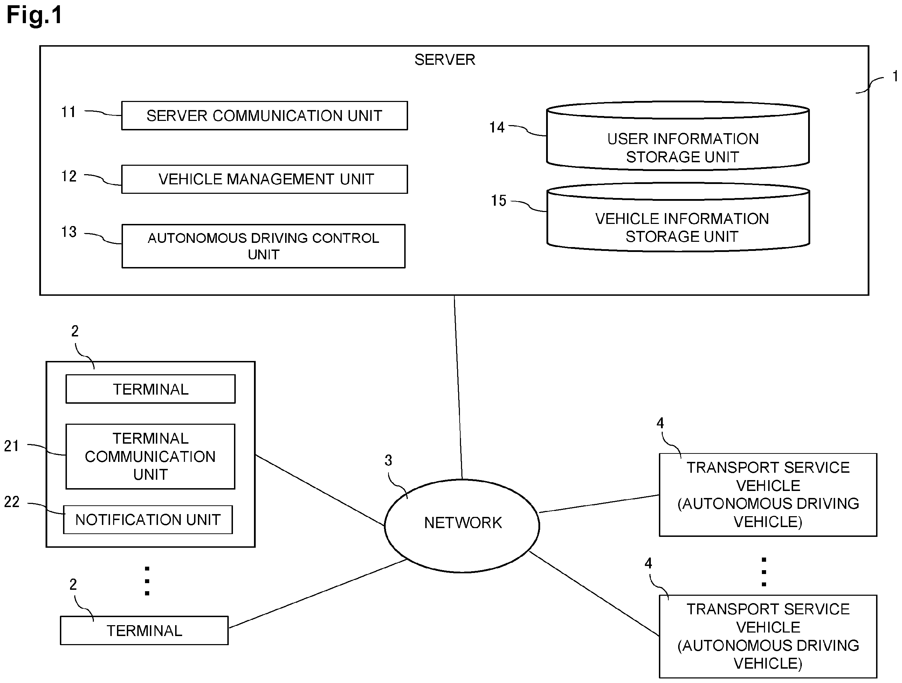

Hereinafter, one or more embodiments of a vehicle management system according to the present invention will be described with reference to the drawings. Fig. 1 is a block diagram illustrating a vehicle management system according to an embodiment of the present invention, and the system of the present embodiment includes a server 1, terminals 2 for users, a network 3 constituting telecommunications network, and one or more transportation service vehicle 4 (hereinafter, transportation service vehicle 4 is also referred to as "vehicle 4"). The system of this embodiment determines vehicle allocation schedule from the desired condition specified by the user and allocates vehicle 4 to carry the user to destination. In addition, while the vehicle is traveling, the systems of this embodiment manage the vehicle based on position of position and user of vehicles. Then, when driving vehicle 4 according to vehicle allocation schedule, the vehicle is managed by adjusting a time at which the vehicle arrives at the boarding point so that the vehicle 4 does not stop at the boarding point of the user for a long time.

Server 1 of the present embodiment includes a computer having hardware and software, the computer includes a ROM (Read Only Memory) for storing a program, a CPU (Central Processing Unit) for executing a program stored in the ROM, and a RAM (Random Access Memory) serving as an accessible storage device. A micro processing unit (MPU), a digital signal processor (DSP), an application specific integrated circuit (ASIC), a field programmable gate array (FPGA), or the like can be used as an operation circuit as substitute for or in addition to the CPU.

As shown in Fig. 1, the server 1 includes a server communication unit 11, a vehicle management unit 12, an autonomous driving control unit 13, a user information storage unit 14, and a vehicle information storage unit 15. The server communication unit 11 is a communication device that inputs and outputs various types of information by transmitting and receiving signals including information between a plurality of user terminal 2 through telecommunications network (networks). The server communication unit 11 transmits and receives signals to and from a plurality of vehicle 4 via telecommunications network.

Vehicle management unit 12 uses the server communication unit 11 to receive information transmitted from terminals 2 carried by a plurality of user at predetermined time intervals (e.g., 100 msec) via the network 3, respectively. The vehicle management unit 12 also uses the server communication unit 11 to receive information transmitted from the plurality of vehicle 4 via the network 3. The Vehicle management unit 12 accepts the utilization request of vehicle 4 from a plurality of user. Use of vehicle includes reserved use of vehicle 4 and/or immediate use of vehicle 4. Utilization request are indicated by departure point, destination, a utilization time, etc. A departure point, a destination, and the utilization time are specified by user terminal 2 operations. Upon receipt of the utilization request from user, the vehicle management unit 12 stores utilization information of the vehicle requested by the user in the user information storage unit 14. Then, vehicle management unit 12 prepares a vehicle allocation schedule for vehicle according to the utilization requests of each of users. The vehicle allocation schedule is a vehicle operation plan that includes not only a schedule for transporting one user from the departure point to the destination, but also a schedule for transporting several users together from the departure point to the destination. The vehicle allocation schedule is indicated by a travel route from the departure point of the vehicle to an arrival point of vehicle through a boarding position and deboarding point of the user, and by arrival times and departure times at each point.

The vehicle management unit 12 correlates the prepared vehicle allocation schedule with the utilization information of the user and stores it in vehicle information storage unit 15. The vehicle management unit 12, for example, when increasing the user sharing the vehicle with a fixed vehicle allocation schedule, prepares a vehicle allocation schedule based on the utilization information of a candidate user for sharing and the utilization information corresponding to the prepared vehicle allocation schedule, so as to meet the utilization request of each user to be shared. Then, the vehicle management unit 12 updates vehicle allocation schedule recorded in vehicle data storage unit 15 to the newly prepared vehicle allocation schedule.

The vehicle management unit 12 manages the stopping position of vehicle 4 by obtaining position of a parked vehicle 4. In addition, vehicle management unit 12 manages position of vehicle 4 while driving by obtaining position of a traveling vehicle 4. The vehicle management unit 12 manages whether or not the vehicle 4 travels along the vehicle allocation schedule. The vehicle management unit 12 also acquires traffic information and updates the vehicle allocation schedule information. For example, when arrival time to the arrival point of vehicle 4 is delayed due to traffic congestion, etc. than the time indicated by the vehicle allocation schedule, the vehicle management unit 12 acquires the latest traffic information and prepares a vehicle allocation schedule using the acquired traffic information. When the vehicle allocation schedule is updated, the vehicle management unit 12 sends the updated vehicle allocation schedule to the user.

The vehicle management unit 12 manages the position of the user to be boarded, and determines whether or not the target user can arrival to the boarding point at estimated boarding time. When the vehicle arrives at this boarding point before user turns arrives at the boarding point, the vehicle must stop at the boarding point to wait for the user arrival. When such a vehicle stops for a long time, traffic flow may be obstructed. In this embodiment, the vehicle is managed by adjusting the time at which the vehicle arrives at the boarding point, in order to prevent vehicle from stopping at boarding point of user for a long time. The vehicle management unit 12 adjusts the arrival time of the vehicle according to the arrival time at which the user arrives at the boarding point when determining that the target user is late for the estimated boarding time. The vehicle management unit 12, for example, adjusts the estimated arrival time of the vehicle 4 by delaying the departure time of the vehicle 4 from the allocation center when determining that user is late for the estimated boarding time prior to departure of vehicle 4 from the allocation center. When the vehicle management unit 12 determines that the user is later for the estimated boarding time while vehicle 4 is traveling, the vehicle management unit 12 delays the estimated arrival time of vehicle 4 by controlling vehicle 4 traveling. The vehicle can be controlled by, for example, changing travel route, changing vehicle speed, or changing travel mode. The change in travel route is to change to a route with a longer distance than travel route shown indicated by the vehicle allocation schedule, for example. The vehicle speed change is to change vehicle speed set by arrival point to a slower vehicle speed. The change in travel mode is, for example, to change from a power mode to an eco-mode. Eco-mode is a travel mode that reduces the amount of energy consumed during vehicle traveling and is travel mode to suppress changes in vehicle speed. Power mode, on the other hand, is a mode to increase energy consumption and arrival to the target point more quickly. In other words, by changing to eco mode, unnecessary idling can be reduced and energy consumption can be suppressed. The vehicle management unit 12 change the vehicle allocation schedule to delay the estimated arrival time of vehicle 4. As a result, the vehicle management unit 12 manages traveling of vehicle 4 by adjusting the time at which the vehicle 4 arrives at boarding point according to the current position of the user and the position of the vehicle 4 with respect to boarding point.

The vehicle management unit 12 also uses the server communication unit 11 to transmit the vehicle allocation schedule to user terminal 2. By checking vehicle allocation schedule information that is notified to user terminal 2, user can understand boarding position, estimated boarding time, the departure position, the scheduled departure time, and travel route, etc.

Autonomous driving control unit 13 controls the transportation service vehicle 4 based on the vehicle allocation schedule prepared by vehicle management unit 12. The autonomous driving control unit 13 obtains position information and time information contained in vehicle allocation schedule and executes control for the transportation service vehicle 4 which travels on the traveling route from the allocation center to the destination through the boarding point of the user. The autonomous driving control unit 13 calculates vehicle control information required for autonomous driving base on the position information and time information indicated by the vehicle allocation schedule, and uses the server communication unit 11 to transmit the control information calculated to vehicle 4. The vehicle control information is information such as vehicle speed information and steering information. The autonomous driving control unit 13, for example, on travel route, sets a plurality of target points for executing the autonomous driving, and calculates the passing time for each of the plurality of target points. The target point is set to a position of nodes, etc. on the travel route. Then, calculate vehicle speed, acceleration, steering quantity, etc. so that vehicle passes through the target points at the calculated passing time to travel on travel route. Then, autonomous driving control unit 13 transmits the calculated vehicle control information indicating vehicle speed, acceleration, and steering amount to vehicle 4 in addition to the vehicle allocation schedule information Then, the vehicle 4 travels under the autonomous driving control based on vehicle control information generated by the autonomous driving control unit 13 and the information of the vehicle allocation schedule. In addition, the autonomous driving control unit 13 transmits position information and time information contained in vehicle allocation schedule prepared in vehicle management unit 12 to the on-board control device of vehicle 4, and the transportation service vehicle 4 may control vehicle speed, steering angle, etc. so as to travel according to the vehicle allocation schedule.

The server 1 includes a user information storage unit 14 and a vehicle information storage unit 15 as a storage unit, and while utilizing the information stored therein, the above-described vehicle management unit 12 and autonomous driving control unit 13 realize the functions to be described later by the software established in the ROM.

The user information storage unit 14 records the information of user and the utilization information concerning the utilization requests of user. The user information storage unit 14 stores the name, address, and other personal information in association with the identification information (ID) as user information. User information includes historical information on the use of vehicle, such as the number of shared rides, the number of time of using vehicle, and the number of reservations. The utilization information is information related to the usage of vehicle desired by user, and includes: boarding position, estimated boarding time, the unloading position, the scheduled unloading time, and the like.

The vehicle information storage unit 18 is a database for storing information about vehicle condition of the transportation service vehicle 4 transmitted from various sensor provided in the transportation service vehicle 4, such as map data required in generating travel route. The vehicle information storage unit 18 stores vehicle allocation schedule assigned to vehicle 4 in association with vehicle ID.

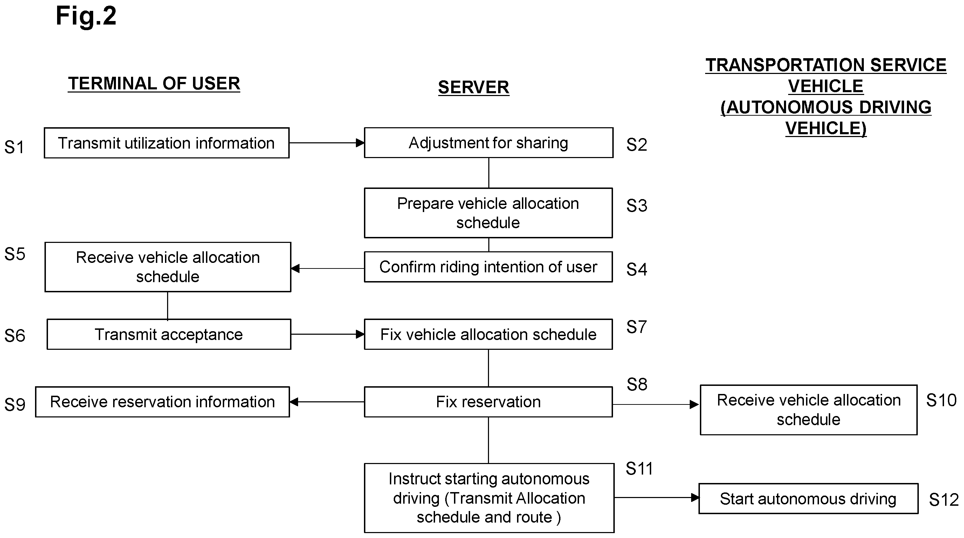

Next, with reference to Fig. 2, an outline of an information processing procedure executed in the system of the present embodiment will be described. Fig. 2 is a flowchart illustrating the information processing procedure. The information processing procedures from the reception of utilization request for use (reservation application) to start traveling of the vehicle 4 are described below.

First, in step S1, when the user accesses server 1 using terminal 2, screens for inputting departure point, destination, and utilization times are displayed to showing information on vehicle usage in terminal 2 of user, and the user inputs information on the utilization request for the respective items In addition, a position detecting sensor, such as the GPS receiver provided in terminal 2, detects latitude and longitude, and transmits this position information to the server 1. Based on position information of terminal 2 entered from terminal 2, the server 1 may set a position suitable for vehicle boarding and alighting as departure point and destination, list departure point and destination, and transmit it to terminal 2. When user selects the desired departure point, the departure point, and the utilization time using terminal 2, terminal 2 transmits the information selected by user to server 2 as utilization information.

In step S2, the vehicle management unit 12 of server 2 receives the utilization information from the terminal 2, and stores the utilization information in the user information storage unit 14. Further, the vehicle management unit 12 performs adjustments for sharing based on the utilization information received. The vehicle management unit 12 schedule search, based on departure point, location, and utilization time indicated in the utilization information, a vehicle allocation schedule which has already been determined, to identify a sharable vehicle allocation schedule. For example, assume that user B wanted to move from boarding point "a" to a point "b", depart between 1:45 p.m. to 2:15 p.m., and arrive from 2:45 p.m. to 3:15 p.m. as utilization request. Then, assume that another user A makes a request to use the vehicle before user B, and the vehicle allocation schedule X was fixed based on the utilization information of the user A. The vehicle management unit 12 determines that user A and user B can be shared even if the vehicle 4 passes through the points a and b desired by user B, which are set near the travel route of the vehicle allocation schedule, during the time desired by the user B, when the vehicle 4 can reach the destination of the user A by the desired deboarding time of the user A. On the other hand, the vehicle management unit 12 determines that user A and user B cannot be shared when the utilization conditions of user A are not satisfied by sharing the vehicle under the conditions indicated by the utilization information of user B. The vehicle management unit 12 determines whether or not the vehicle can be shared with other users stored in the user information storage unit 14 as well as the user A. Thus, vehicle management unit 12 performs adjustments for sharing.

In step S3, the vehicle management unit 12 prepares the vehicle allocation schedule according to the result of the adjustment for sharing. When sharing is possible, the vehicle management unit 12 prepares the vehicle allocation schedule from the boarding point to the destination through the boarding point and / or deboarding point (ride points) after setting the boarding point and / or deboarding point (ride points) suitable for user getting on and off. When sharing is impossible, the vehicle management unit 12 prepares a vehicle allocation schedule for user with a new utilization request.

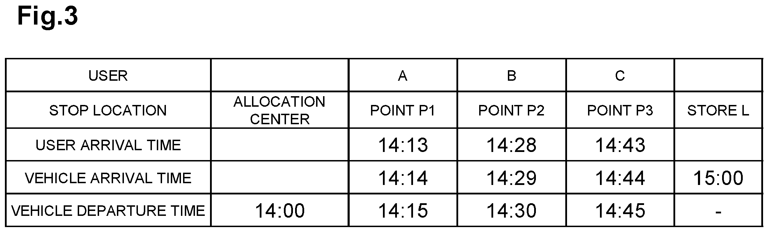

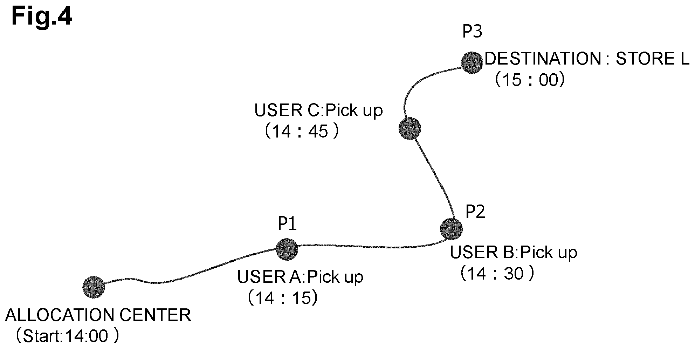

Fig. 3 is a diagram illustrating an example of the vehicle allocation schedule prepared by the vehicle management unit 12, and Fig. 4 is a diagram illustrating an example of the travel route based on the vehicle allocation schedule. The transportation service vehicle 4 departs from the vehicle allocation center at 14:00, arrives at the P1 point, where the user A is waiting, at 14:14, and loads the user A. The transportation service vehicle 4 departs from P1 point at 14:15, and arrives at the P2 point, where the user B is waiting, at 14:29, and loads the user B. The transportation service vehicle 4 departs from P2 point at 14:30, and arrives at the P3 point, where the user C is waiting, at 14:44, and loads the user C. The transportation service vehicle 4 departs from P3 point at 14:45, and arrives at destination store L at 15:00. Destination of user A to C shall be shop L.

In step S4, the vehicle management unit 12 transmits the information of the vehicle allocation schedule to terminal 2 in order to confirm the riding intention to user requesting the use of the vehicle. The vehicle allocation schedule information includes position information of the boarding point, vehicle departure time, position information of the deboarding point, and vehicle arrival time information. The vehicle departure time is the time at which vehicle departs from the boarding point, and vehicle arrival time is the time at which vehicle arrives at the deboarding point. Note that vehicle departure time may be a predetermined time or an earlier time than the time specified by the vehicle allocation schedule in order to prevent user from arrival behind boarding point. In addition, the vehicle arrival time may be a predetermined time or a later time than the time specified by the vehicle allocation schedule, taking into account the possibility that vehicle 4 may be delayed to deboarding point.

When determining that the vehicle can be shared, the vehicle management unit 12 transmits the vehicle allocation schedule information to the terminal 2 for user that has already made the utilization request, that is, user that accepts vehicle sharing.

In step S5, user terminal 2 receives the vehicle allocation schedule information. The notification unit 22 of terminal 2 notify the user of the stop location of vehicle 4, vehicle arrival time, and vehicle departure time in the information of vehicle allocation schedule shown in Fig. 3.

In step S6, when user accepts the utilization condition indicated by the vehicle allocation schedule, the user operates the terminal 2 and transmits a signal indicating the acceptance to server 1. The user also chooses whether or not accept sharing when confirmation of sharing is requested from server 1. The terminal 2 transports a response signal indicating the selection result of the acceptance or non-acceptance to server 1.

In step S7, the vehicle management unit 12 of server 1, based on the response signal from terminal 2, fixes the vehicle allocation schedule when confirming that user has accepted the use. For example, in the examples of Figs. 3 and 4, when user A to C approves the use of vehicle based on vehicle allocation schedule, the vehicle management unit 12 fixes the vehicle allocation schedule shown in Figs. 3 and 4.

In step S8, vehicle management unit 12 stores the fixed vehicle allocation schedule in vehicle data storage unit 15. The vehicle management unit 12 fixes the reservation for use of vehicle 4. As a result, the user that sent the utilization information in the control flow of step S1 is ready to use the vehicle 4. In step 9, the terminal 2 receives the reservation information. In step S10, the vehicle 4 receives the vehicle allocation schedule.

In step S11, when the present time reaches the departure time indicated by the vehicle allocation schedule, the autonomous driving control unit 13 transmits an instruction signal for starting autonomous driving to vehicle 4. The indication signals contain the vehicle allocation schedule information.

In step S12, the vehicle 4 receives the instruction signal from the server 1 and starts the autonomous driving.

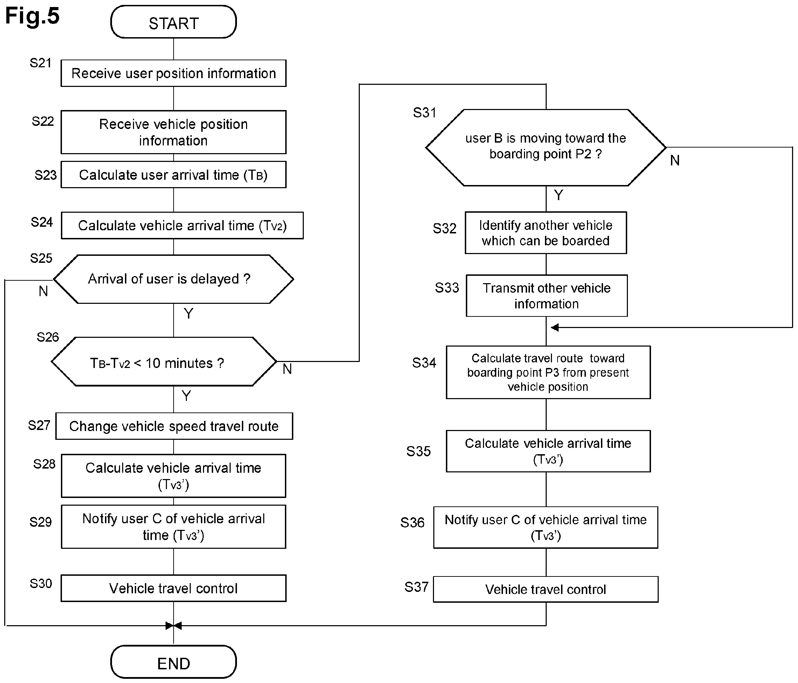

Next, with reference to Fig. 5, an outline of an information processing procedure executed in the system of the present embodiment will be described. Fig. 5 is a flowchart illustrating the information processing procedure. The information processing procedures during automated operation in vehicle 4 will be described below. While vehicle 4 is traveling, the server 1 repeatedly executes the information processing (control flow) shown in Fig. 5 at a predetermined period. In the following explanation, the information processing procedures are shown when the vehicle 4 is traveling in the vehicle allocation schedule shown in Figs. 3 and 4, and the vehicle 4 is heading from the boarding point P1 to boarding point P2 after the user A rides on the vehicle 4. As shown in Figs. 3 and 4, the vehicle management unit 12 of the server 1 designates: boarding point (P1) to arrival by 14:13 for user A; boarding point (P2) to arrival by 14:28 for user B; and boarding point (P3) to arrival by 14:43 for user C. The vehicle 4 is traveling according to the vehicle allocation schedule, arrives at the boarding point P1 at 14:14, and the user A gets on at the boarding point P1, and the vehicle 4 leaves the boarding point P1 at 14:15 and heads to the boarding point P2.

First, in step S21, the vehicle management unit 12 acquires position information of user A to C using server communication unit 11. The position information of user A to C corresponds to position information of each of terminals 2 owned by user A to C. Note that since user A has already boarded the vehicle 4, the vehicle management unit 12 does not have to acquire position information of the user A. In step S22, the vehicle management unit 12 communicates with the traveling vehicle 4 using the server communication unit 11 and receives the present position information of the vehicle 4.

In step S23, the vehicle management unit 12 calculates the time (user arrival time: TB) at which user B arrives at the boarding point P2. Specifically, the vehicle management unit 12 calculates user arrival time (T_{B}) by calculating the distance on the route from the present position of user B to the boarding position P2, and dividing the distance by the moving velocity of user B to calculate the user arrival time (T_{B}). The moving time of user B can be calculated from position information of user B received at predetermined time intervals.

In step S24, the vehicle management unit 12 calculates the time (vehicle arrival time: Tᵥ₂) at which vehicle 4 arrives at the boarding position P2. Specifically, the vehicle management unit 12 calculates the travel distance from the present position of vehicle 4 to the boarding position P2, and calculates the vehicle arrival time (Tᵥ₂) based on the travel distance, vehicle speed of vehicle B, the traffic data, and the like.

In step S25, the vehicle management unit 12 compares user arrival time (T_{B}) with vehicle arrival time (Tᵥ₂) to determine whether arrival of user B to boarding point P2 is delayed. When the user arrival time (T_{B}) is later than the vehicle arrival time (Tᵥ₂), vehicle the management unit 12 determines that arrival of user B is delayed. When arrival of user B is not late, the server 1 terminates the control-flow shown in Fig. 5. When arrival of user B is delayed, the server 1 executes the control process of step S26.

In step S26, the vehicle management unit 12 calculates the difference between user (T_{B}) and vehicle arrival time (Tᵥ₂), and compares the calculated difference with a predetermined time threshold (e.g., 10 minutes), thereby determining whether or not the delay of arrival of user B is 10 minutes or less. When arrival delay of user B is less than 10 minutes, the server 1 executes the control process from step S27 to step S30. When the delay of arrival of user B is 10 minutes or more, the server 1 executes the control process from step S31 to step S37.

In step S27, the autonomous driving control unit 13 acquires user arrival time (T_{B}) from the vehicle management unit 12, and controls the traveling of vehicle 4 by autonomous driving function so that the time of arrival to the boarding point P2 of vehicle 4 is the user arrival time (T_{B}) or later than the user arrival time (T_{B}). In order for vehicle 4 to wait for arrival of user B at boarding point P2 as short as possible, the autonomous driving control unit 13 may adjust estimated arrival time of vehicle 4 so that the time of arrival to boarding point P2 at vehicle 4 is slower than the user arrival time (T_{B}). The autonomous driving control unit 13 controls the traveling of vehicle 4 by changing vehicle speed and/or changing travel route.

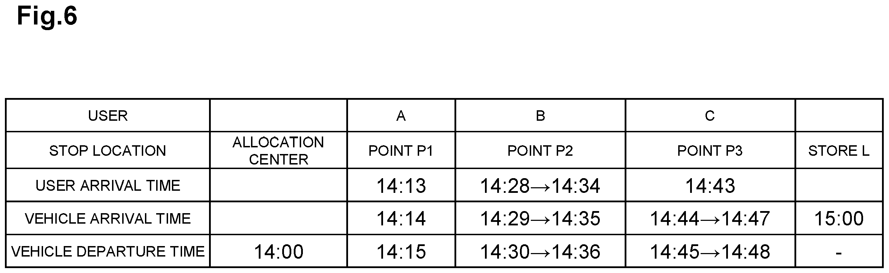

Fig. 6 shows the changed vehicle allocation schedule when arrival is delayed by 6 minutes to the boarding point P2 of user B. As shown in Fig. 6, for example, when arrival is delayed by 6 minutes to boarding point P2 of user B, the autonomous driving control unit 13 lowers the average vehicle speed from the current position to the boarding point of the vehicle below the current average vehicle speed so that the travel times extend by 6 minutes. Or the autonomous driving control unit 13 increases the travel distance of vehicle 4 by changing travel route and extends the mileage by 6 minutes. As a result, the autonomous driving control unit 13 changes vehicle speed and/or travel route of the vehicle 4 so that the time of arrival to boarding point P2 of vehicle 4 is later than user arrival time (T_{B}). As shown in Fig. 6, arrival time of vehicle B to boarding point P2 is changed from 14:29 to 14:35, and the departure time of vehicle B from boarding point P2 is changed from 14:30 to 14:36. Note that the autonomous driving control unit 13 may change both vehicle speed and travel route of vehicle 4. In addition, the autonomous driving control unit 13 may delay arrival time to boarding point P2 of vehicle 4 by changing travel mode. For user A, who has already boarded vehicle 4, it is less stressful to spend time in vehicle 4 while driving than to wait for arrival of user B at the boarding point P2. In particular, vehicle with autonomous driving function has a higher tendency. Therefore, the system of the present embodiment can enhance convenience as a system.

In addition, when changing travel route, server 1 may prefer routes that the vehicle passes through point, which is meaningful for user while riding, such as sightseeing spots. Thus, the systems of the present embodiment can provide new value for user while riding.

In step S28, the vehicle management unit 12 calculates vehicle arrival time (T_{v3'}) of vehicle 4 to boarding point P3. The vehicle arrival time of boarding point P2 is delayed, and the vehicle arrival time of boarding point P3 is also delayed. At this time, the autonomous driving control unit 13 changes vehicle speed of vehicle 4 so that the travel time from boarding point P2 to boarding point P3 is as short as possible. In addition, when there is a travel route in which the travel time from boarding point P2 to boarding point P3 is shorter than that when vehicle 4 starts traveling from the allocation center due to a change in the traffic condition or the like, the autonomous driving control unit 13 may change travel route. Further, when traveling in eco mode from the current position of the vehicle to the boarding point P2, the autonomous driving control unit 13 may set the travel mode to the power mode when traveling from the boarding point P2 to the boarding point P3. The vehicle management unit 12 calculates vehicle arrival time (Tv3') under the driving conditions changed by the autonomous driving control unit 13. In the case of Fig. 6, the delay to boarding point P3 is shortened to 3 minutes, and the vehicle arrival time (T_{v3'}) is 14:47. In addition, the vehicle management unit 12 changes the vehicle allocation schedule. The vehicle allocation schedule after the change is a schedule that reflects vehicle speed, travel route, and travel mode, etc. changed by the autonomous driving control unit 13, and is indicated by vehicle arrival time after the change, vehicle departure time after the change, and travel route after the change.

In step S29, the vehicle management unit 12 transmits the changed vehicle arrival time (T_{v3'}) to the terminal 2 of user C, thereby notifying user C that arrival of vehicle B is delayed and notifying user C of the vehicle arrival time (T_{v3'}). Note that, the vehicle management unit 12 may notify user C of a time earlier than the changed vehicle arrival time (T_{v3'}) in order to prevent vehicle 4 from stopping at boarding point P3 for a long time. In step S30, the autonomous driving control unit 13 controls the traveling of vehicle 4 based on the changed vehicle allocation schedule.

In the control processing of step S26, when determining that the delay of arrival of user B is 10 minutes or more, the server 1 executes the following control processing. When user B's arrival delay becomes more than 10 minutes, server 1 stops vehicle 4 from carrying the user B. The server 1 may notify user B that the passenger of vehicle 4 has been cancelled.

In step S31, the vehicle management unit 12 determines whether or not user B is moving toward the boarding point P2 based on position information of user B. When determining that the user B is moving toward boarding point P2, in step S32, the vehicle management unit 12 identifies another vehicle 4 on which user B can ride. The other vehicle 4 is a vehicle that can be shared according to the utilization request of the user B or is a vehicle 4 for which no reservation has been made and which meets the utilization request of the user B. When the other vehicle 4 can be identified, the vehicle management unit 12 transmits other vehicle travel information (other vehicle information) to the terminal 2 of the user B. The other vehicle information is information of vehicle allocation schedule including the time at which the other vehicle arrives at the boarding point P2. The place where user B rides on the other vehicle may be changed from the boarding point P2.

In the control process of step S31, when determining that user B is not moving toward boarding point P2, the control process proceeds to step S34. That is, when user B is not moving toward the boarding point P2, it is determined that user B does not intend to ride on vehicle 4, and the server 1 prepares vehicle allocation schedule after removing user B from user to be shared.

In step S34, vehicle management unit 12 calculates a travel route toward the boarding point P3 from the present position of vehicle 4 without passing through the boarding position P2. In step S35, the vehicle management unit 12 calculates estimated arrival time (T_{v3'}) to boarding position P3 when the vehicle travels in the changed travel route. The vehicle management unit 12 may calculate the estimated arrival time (T_{v3'}) of vehicle 4 based on the present position of user C.

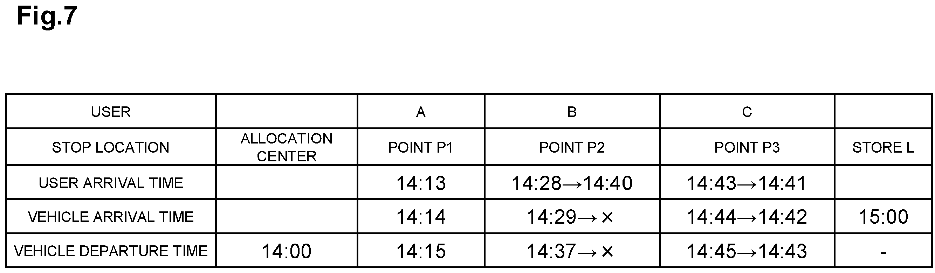

Fig. 7 shows vehicle allocation schedule after user B's ride to vehicle 4 has been cancelled. For example, when user C is near boarding point P3 when travel route is changed, arrival time to the boarding point P3 (14:41) of user C is earlier than user arrival time (T_{C'}: 14:43). Estimated arrival time (T_{C'}: 14:43) is the time notified in the control flow of step S29. In such cases, the autonomous driving control unit 13 changes the vehicle speed, the traveling route, the traveling mode, and the like so that the vehicle 4 arrives at the boarding point P3 as soon as possible. In the case of Fig. 7, arrival time of vehicle 4 to the boarding point P3 is advanced from 14:44 to 14:42, and the departure time of vehicle 4 from boarding point P3 is advanced from 14:45 to 14:43, by changing at least one of the following elements: vehicle speed, travel route, and travel mode. The vehicle management unit 12 prepares a vehicle allocation schedule based on vehicle speed, travel route, and travel mode changed by the autonomous driving control unit 13.

On the other hand, when the user C is not in the vicinity of the boarding point P3 and arrival time of user C to boarding point P3 is user arrival time (T_{C'}: 14:43) or delayed from user (T_{C'}: 14:43), the autonomous driving control unit 13 changes vehicle speed and travel route (travel route) of vehicle 4 so that the time of arrival to boarding point P3 of vehicle 4 is later than user arrival time (T_{C'}). For example, when the vehicle 4 does not pass through the boarding point P2, the travel distance may be shortened. In such cases, arrival time of vehicle 4 to boarding point P3 becomes faster due to the change of travel route, and the time for vehicle 4 to park at boarding position P3 becomes longer. Therefore, the autonomous driving control unit 13 adjusts vehicle speed and/or travel route of vehicle 4 so that the time of arrival to boarding point P3 of vehicle 4 is later than user (T_{C'}).

In step S36, vehicle management unit 12 notifies user C of arrival delay of vehicle B and vehicle arrival time (T_{v3'}) by transmitting the changed vehicle arrival time (T_{v3'}) to terminal 2 of user C. The vehicle management unit 12 may notify user C of a time earlier than the changed vehicle arrival time (T_{v3'}) in order to prevent vehicle 4 from stopping at boarding point P3 for a long time. In step S30, autonomous driving control unit 13 controls the traveling of vehicle 4 based on the changed vehicle allocation schedule. When the vehicle arrival time (T_{v3'}) is not changed, vehicle management unit 12 may notify the changed information in vehicle allocation schedule (for example, information indicating that the information has been changed to a travel route that does not pass through boarding point P2).

As described above, according to the systems of the present embodiment, terminal 2 transmits a user position information indicating the present position of user to server 1 via telecommunications network. The server 1 receives the current position information (vehicle position information) of the vehicle 4 from the vehicle 4 and user position information through the telecommunications network, sets boarding point at which user rides vehicle 4 and adjusts a time at which the vehicle 4 arrives at the boarding point in accordance with the present position of the user and the position of the vehicle with respect to the boarding point to manage traveling of the vehicle by setting. This prevents vehicle 4 from waiting for user to arrival, which prevents vehicle from stopping for a longer period of time and prevents traffic flow from being obstructed. In addition, since timing at which the user arrives at the boarding point and timing at which the vehicle arrives at the boarding point can be brought close to each other, it is possible to prevent vehicle from stopping for a long time at boarding point.

In the present embodiment, based on the present position of user, user arrival time at which the user arrives at the boarding point is calculated, and the traveling of the vehicle with autonomous driving function is controlled so that the time at which the vehicle arrives at the boarding point is the calculated user arrival time or later than the calculated user arrival time. This prevents vehicle with autonomous driving function from stopping for a long time at boarding point of user.

In this embodiment, vehicle speed of vehicle 4 is controlled so that the time at which the vehicle arrives at the boarding point is the calculated user arrival time or later than the calculated user arrival time. This allows arrival time of vehicle to be adjusted by changing vehicle speed.

In the present embodiment, travel route is changed that the time at which the vehicle arrives at the boarding point is the calculated user arrival time or later than the calculated user arrival time. This allows arrival time of vehicle to be adjusted by changing travel route.

In the present embodiment, the terminal 2 receives information including estimated arrival time of vehicle 4 from server 1 and notifies user of the estimated arrival time of vehicle 4. This increases the possibility that user will arrival to boarding point by that time by allowing user to be aware of arrival time of vehicle 4.

In the present embodiment, the server 1 sets first boarding point at which the first user rides and second boarding point at which the second user rides, and prepares a vehicle allocation schedule in which vehicle 4 travels through the first boarding point and the second boarding point in order for the first user and the second user to share a ride on the vehicle. The prepared vehicle allocation schedule contains a first vehicle arrival time in which the vehicle 4 arrives at the first vehicle arrival point and a second vehicle arrival time in which the vehicle 4 arrives at the second vehicle arrival point. Then, autonomous driving control unit 13 of server 1 controls the traveling of vehicle based on the vehicle allocation schedule, and the vehicle management unit 12 of server 1 prepares the changed vehicle allocation schedule when adjusting the first vehicle arrival time in accordance with a present position of the first user and the position of the vehicle with respect to the first boarding point. A second terminal owned by the second user receives the time information including the adjusted second vehicle arrival time indicated by vehicle allocation schedule after the change, and notifies the second user of the second vehicle arrival time. This prevents the second user from being waited for a long time in second boarding point, and the second user can be scheduled for the vehicle arrival time after change.

As a modification of this embodiment, when arrival time to destination of vehicle 4 is delayed by adjusting so that the time at which the vehicle arrives at the boarding point is the calculated user arrival time or later than the calculated user arrival time, server 1 may notify the destination facilities of estimated arrival time of vehicle 4. The server 1 can communicate with destination facilities through networks, and server 1 uses this communication to transmit estimated arrival time information of vehicle 4. For example, assume that more than one user is riding in sharing and several user has made reservations to provide services (such as meals at restaurants) to stores where more than one user would be destination. The services are preferably provided to match arrival time of vehicle to destination. When arrival of vehicle to destination is delayed due to the delay in arrival to boarding point of user, the modification is to notify destination facilities of estimated arrival time of vehicle 4 so that timing that the vehicle arrives at destination can be matched with timing that provides services. As a result, user's satisfaction with the system is raised, and the system utilization rate is raised.

### [EXPLANATIONS OF LETTERS OR NUMERALS]

- 1...: Server
- 11...: Server communication unit
- 12...: Vehicle management unit
- 13...: Autonomous driving control unit
- 14...: User information storage unit
- 15...: Vehicle information storage unit
- 2...: Terminal
- 3...: Network
- 4...: Transport service vehicle

## Claims

1. A vehicle management system for managing a vehicle with an autonomous driving function, comprising a server and a terminal to be used by a user,
wherein the terminal includes a terminal communication unit which transmits user position information indicating a present position of the user to the server through telecommunications network, and
the server includes:
a server communication unit for receiving, through the telecommunications network, vehicle position information indicating a present position of the vehicle from the vehicle and the user position information from the terminal communication unit; and
a vehicle management unit for setting a boarding point at which the user rides the vehicle and for managing traveling of the vehicle by adjusting, in accordance with the present position of the user and the position of the vehicle with respect to the boarding point, a time at which the vehicle arrives at the boarding point.

2. The vehicle management system according to claim 1, wherein:
the server includes an autonomous driving control unit for controlling traveling of the vehicle;
the vehicle management unit calculates an estimated arrival time at which the user arrives at the boarding point based on the present position of the user; and the autonomous driving control unit controls traveling of the vehicle with the autonomous driving function so that the time at which the vehicle arrives at the boarding point is the estimated arrival time or later than the estimated arrival time.

3. The vehicle management system according to claim 2, wherein the autonomous driving control unit controls a vehicle speed of the vehicle so that the time at which the vehicle arrives at the boarding point is the estimated arrival time or later than the estimated arrival time.

4. The vehicle management system according to claims 2 or 3, wherein the autonomous driving control unit:
calculates a travel route from the present position of the vehicle to the boarding point; and
changes the travel route so that the time at which the vehicle arrives at the boarding point is the estimated arrival time or later than the estimated arrival time.

5. The vehicle management system according to any one of claims 2 to 4, wherein
the terminal includes a notification unit for notifying the user of information,
the terminal communication unit receives information including the estimated arrival time from the server, and
the notification unit notifies the user of the estimated arrival time.

6. The vehicle control system according to any one of claims 2 to 5, wherein
the terminal includes a first terminal used by a first user and a second terminal used by a second user;
the server communication unit receives first user position information indicating a position of the first user and second user information indicating a position of second user;
the vehicle management unit,
sets a first boarding point at which the first user rides and a second boarding point at which the second user rides; and
prepares a vehicle allocation schedule in which the vehicle travels through the first boarding point and the second boarding point, in order for the first user and the second user to share a ride on the vehicle;
the vehicle allocation schedule includes a first vehicle arrival time at which the vehicle arrives at the first boarding point and a second vehicle arrival time at which the vehicle arrives at the second boarding point;
the autonomous driving control unit controls traveling of the vehicle based on the vehicle allocation schedule;
the vehicle management unit, when adjusting the first vehicle arrival time in accordance with a present position of the first user and the position of the vehicle with respect to the first boarding point, prepares the vehicle allocation schedule after change;
the second terminal receives time information including the second vehicle arrival time after change indicated by the vehicle allocation schedule after the adjustment, and notifies the second user of the second vehicle arrival time.

7. A vehicle management device for managing a vehicle with an autonomous driving function, comprises a server and a terminal of user, the vehicle management device comprising:
a communication unit for receiving, through a telecommunications network, vehicle position information indicating a present position of the user from the terminal and vehicle position information indicating a present position of the vehicle from the vehicle; and
a vehicle management unit for setting a boarding point at which the user rides the vehicle and for managing traveling of the vehicle by adjusting, in accordance with the present position of the user and the position of the vehicle with respect to the boarding point, a time at which the vehicle arrives at the boarding point.

8. A vehicle control method for managing a vehicle with an autonomous driving function, using a server, the vehicle control method comprising:
receiving, through a telecommunications network, user position information indicating a present position of the user;
receiving, through the telecommunications network, vehicle position information indicating a present position of the vehicle from the vehicle, the user position information from the terminal communication unit; and
setting a boarding point at which the user rides the vehicle and managing traveling of the vehicle by adjusting, in accordance with the present position of the user and the position of the vehicle with respect to the boarding point, a time at which the vehicle arrives at the boarding point.
